# EUROPEAN PATENT SPECIFICATION

(11) **EP 1 305 535 B1**
(45) Date of publication and mention of the grant of the patent: **12.04.2006**
(21) Application number: 01944087.4
(22) Date of filing: 28.06.2001
(51) Int. Cl.: F16D 57/02, F16H 47/07

(54) **HYDRODYNAMIC BRAKE**
HYDRODYNAMISCHE BREMSE
FREIN HYDRODYNAMIQUE

(30) Priority: 07.07.2000 SE 0002590
(43) Date of publication of application: 02.05.2003
(73) Proprietor: Scania CV AB, 151 87 Södertälje (SE)
(72) Inventor: JÖNSSON, Hans, S-151 47 Södertälje (SE); ARNE, Johnny, S-151 45 Södertälje (SE)
(74) Representative: Waldebäck, Hans Olov
(86) International application number: PCT/SE2001/001488
(87) International publication number: WO 2002/004833

(56) References cited:
- EP-A2- 0 373 490
- US-A- 3 761 196

## Description

### BACKGROUND OF THE INVENTION AND PRIOR ART

The present invention relates to a hydrodynamic brake according to the preamble of claim 1. Such a brake is for instance disclosed in US-A-3 761 196.

In connection with the use of hydrodynamic brakes, such as retarders in vehicles, it is an ambition to reduce the volume of sound generated by the retarder and to increase the braking capacity of the retarder such that it may be made smaller with a maintained capacity. Hereby, it is important that the retarder has such a construction that cavitation of the medium is avoided when it flows with a high velocity in the toroid-shaped space of the retarder. The medium is usually an oil having suitable properties for such a flow. The cavitation of the medium arises when the pressure is below the boiler pressure of the medium such that the medium locally transforms into vapour phase and forms gas bubbles. When the pressure again arises over the boiler pressure level, the medium condenses and the gas bubbles collapse with heavy pressure shots as a consequence.

In hydrodynamic brakes, low pressures arise above all at the radially outer ends of the vanes of the stator during the passage of the medium after the medium has left the rotor. The medium here may have a velocity of up to 100 m/s. Also in connection with the passing of the medium from the stator to the rotor, very low pressures may arise locally at the radially inner ends of the vanes of the rotor. In these areas, a risk also exists that the medium vaporises and forms gas bubbles, which thereafter condense during creation of pressure shots alongside the wall surfaces of the vanes. There is a risk here for erosion damages of the vanes. Another negative effect of the cavitation, is that the pressure formation causes oscillations in the vanes, which expires as sonic booms. The cavitation also has the disadvantage that it reduces the efficiency of the hydrodynamic brake.

### SUMMARY OF THE INVENTION

The object of the present invention is to provide a hydrodynamic brake which has such a construction that cavitation of the medium as far as possible is avoided for reducing the risk of sonic booms, for avoiding mechanical wear damages on the vanes and for providing a brake with a reliable high performance.

This object is achieved by the hydrodynamic brake of the initially mentioned kind, which is characterised by the features mentioned in the characterising part of claim 1. The wall surfaces of a vane of a conventional stator where the lowest pressures arises is in an area at the radial outer end of the edge surface. In this area, there is above all such a risk for cavitation that the medium locally is vaporised. Since the vane according to the present invention lacks wall surfaces in this sensitive area, the same low pressures do not arise here as at conventional vanes. Thus, the cavitation of the medium is prevented in a simple and effective way. Mechanical damages on the vanes caused by cavitation are avoided as well as sonic booms such that the hydrodynamic brake does not generate an unnecessarily high sound level. Thus, the hydrodynamic brake may be given a high and reliable performance.

According to a preferred embodiment of the present invention, the outer end of the edge surface of the vane is located at a distance inside said straight line, which distance has a value within an interval of 10 to 30 % of the radius of the toroid-shaped space. The outer end of the edge surface of the vane ought at least to be located at a distance, with a value of at least 10 % of the radius of the toroid-shaped space, from said line in order to prevent cavitation to arise in the area. However, the distance should not exceed 30 % of the radius of the toroid-shaped space. If said distance becomes greater than 30 % of the radius of the toroid-shaped space, the vane capacity is decreased so much that it is not compensated for a cavitation free operation. An optimal distance between the outer end of the edge surface of the vane and said line is within an interval of between 15-25% of the radius of the toroid-shaped space.

According to another preferred embodiment of the present invention, said free edge surface of the vane has a chamfered portion, which comprises said outer end and has an extension at which the distance to said line increases continuously from a brake-point to said outer end. Thus, the edge surface obtains a shape which does not appreciable influence on the capacity of the hydrodynamic brake. The brake-point on the edge surface is with advantage provided at a distance of between 25 and 75 % of the radius of the toroid-shaped space from the outer end. Advantageously, said first portion of the edge surface has a linear extension from the brake-point to the outer end. Such a shaped edge surface of the vanes is easy to manufacture.

According to another preferred embodiment of the present invention, the free edge surface comprises a second portion, which extends between a radially inner end of the edge surface to said brake-point, and the second portion of the edge surface has an extension which coincides with the extension of said line. This second portion thus obtains in this area a corresponding extension as the edge surface of a conventional stator vane.

According to another preferred embodiment of the present invention, the edge surface of at least one of the vanes of the rotor has a radially inner end located on the inside of a straight line extending between the inner and outer edges, which restricts the recess of the rotor. The risk of cavitation in this area is not as great as at the outer ends of the stator vanes but this risk is not negligible. In a corresponding way as above, the vane of the rotor according to the invention consequently lacks the part of a conventional vane of a rotor where such low pressures may arise so that the medium is vaporised. Thereby, it is also here in a simple and effective manner prevented that mechanical damages arise in this area at the same time as sonic booms are avoided.

According to another preferred embodiment of the present invention, the inner end of the free edge surface of the vane of the rotor is located at a distance inside said straight line restricting the recess of the rotor, which distance is within an interval comprising 10-30 % of the radius of the toroid-shaped space. In a corresponding way as at the outer end of the edge surface of the stator vane, it is a question, which needs weighing up, how far inside said line the inner end of the edge surface ought to be provided for obtaining good cavitation preventing properties at the same time as the performance of the vane does not appreciably become negatively influenced. An optimal value of the distance from said line is also here within the interval 15-25 % of the radius of the toroid-shaped space.

According to another preferred embodiment of the present invention, the free edge surface of the rotor vane has a chamfered portion, which is located on the inside of said straight line which restricts the recess of the rotor and which has an extension at which the distance to said line increases continuously from the brake-point to the inner end. Advantageously, the chamfered portion of the edge surface has a linear extension from the brake-point to the inner end. Thus, the vane of the rotor obtains a substantially inverted edge surface in relation to the stator vane.

According to another preferred embodiment of the present invention, the free edge surface of the vane of the rotor comprises a second portion, which extends between a radially outer end of the edge surface to said brake-point, and the second portion of the edge surface has an extension which coincides with the extension of said line. Thus, the second portion obtains an unchanged extension in relation to a conventional rotor vane.

### BRIEF DESCRIPTION OF THE DRAWINGS

In the following, a preferred embodiment of the invention is described as an example with reference to the attached drawings, in which:
- Fig 1: shows a cross-section through a portion of a hydrodynamic brake according to the present invention,
- Fig 2: shows an axial view of the stator in Fig 1,
- Fig 3: shows an axial view of the rotor in Fig 1,
- Fig 4: shows the cross-section in Fig 1 more in detail.

### DETAILED DESCRIPTION OF A PREFERRED EMBODIMENT OF THE PRESENT INVENTION

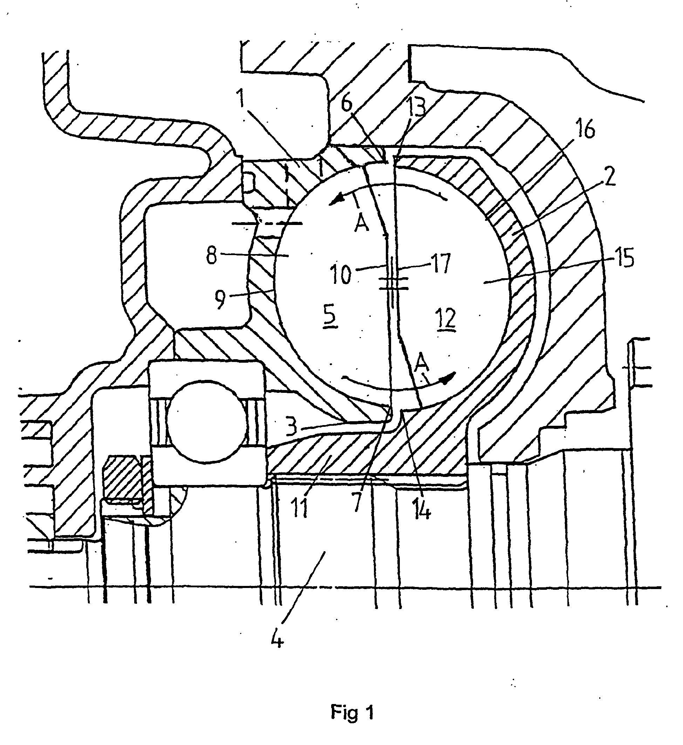

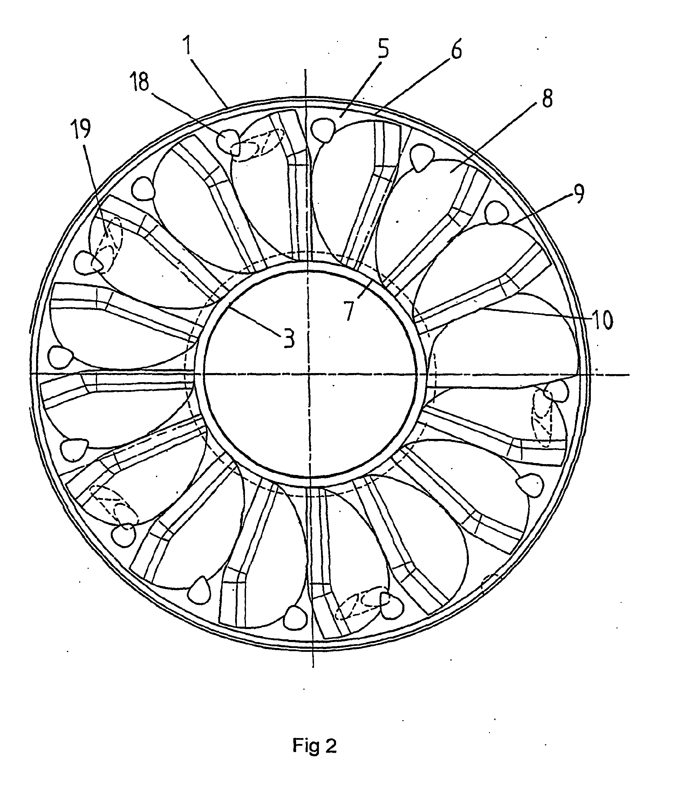

Fig 1 shows a cross-section through a portion of a hydrodynamic brake in form of a retarder of a motor driven vehicle. The retarder comprises a stator 1 and a rotor 2. The stator 1, which is shown separately in Fig 2, comprises an inner radial surface 3, which defines a circular opening. A rotatable shaft 4 is arranged to extend through the circular opening of the stator 1. The rotatable shaft 4 is, via a transmission device, in connection with a driving shaft of the vehicle. The stator 1 is fixedly provided in the vehicle in a suitable manner. The stator 1, which is shown separately in Fig 2, comprises an annular recess 5, which in the mounted state of the retarder, extends around the rotatable shaft 4. The annular recess 5 is restricted in a radial direction outwards by an outer edge 6 and in a radial direction inwards by an inner edge 7. A plurality of vanes 8 are provided with uniform intervals along the circular extension of the annular recess 5. The vanes 8 comprise an edge surface 9 fixedly provided to the bottom surface of the recess 5 and a free edge surface 10 which is not in contact with the bottom surface of the recess 5. The free edge surface 10 has a substantially radial extension through the recess 5 from its inner edge 7 in a direction towards its outer edge 6. Each of the fixedly provided edge surfaces 9 of vanes 8 and the free edge surfaces 10 of the vanes 8 are displaced in relation to each other in the recess 5 such that the lateral surfaces of the vanes obtain an angle of about 45° in relation to the bottom surface of the recess 5.

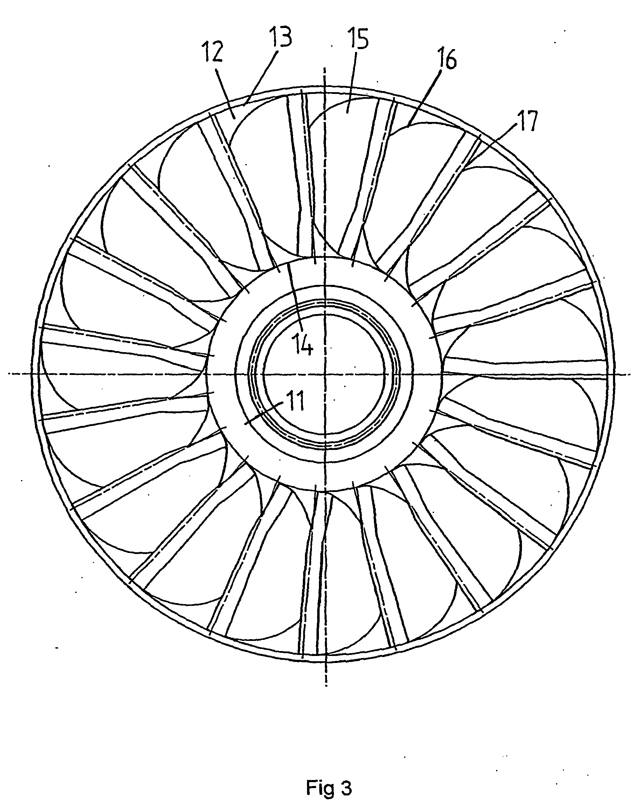

The rotor 2, which is shown separately in Fig 3, comprises a body with a shaft portion 11 fixedly connected to the rotatable shaft 4. Thus, the rotor 2 will rotate synchronously with the rotatable shaft 4. The rotor 2 comprises moreover a substantially corresponding construction as the stator 1 and comprises an annular recess 12, which in the mounted state of the rotor 2, extends around the rotatable shaft 4. The annular recess 12 is restricted in a radial direction outwards by an outer edge 13 and in a radial direction inwards by an inner edge 14. A plurality of vanes 15 are provided with uniform intervals along the circular extension of the annular recess 12. The vanes 15 comprise an edge surface 16 fixedly provided to the bottom surface of the recess 12 and a free edge surface, which is not in contact with the bottom surface of the recess 12. The free edge surface 17 has a substantially radial extension through the recess 12 from its radially outer edge 13 in a direction towards its radially inner edge 14. Each of the fixedly provided edge surfaces 16 and the free edge surfaces 17 of the vanes 15 are displaced in relation to each other in the recess 12 in such a way that the lateral surfaces of the vanes 15 obtain an angle of about 45° in relation to the bottom surface in the recess 12.

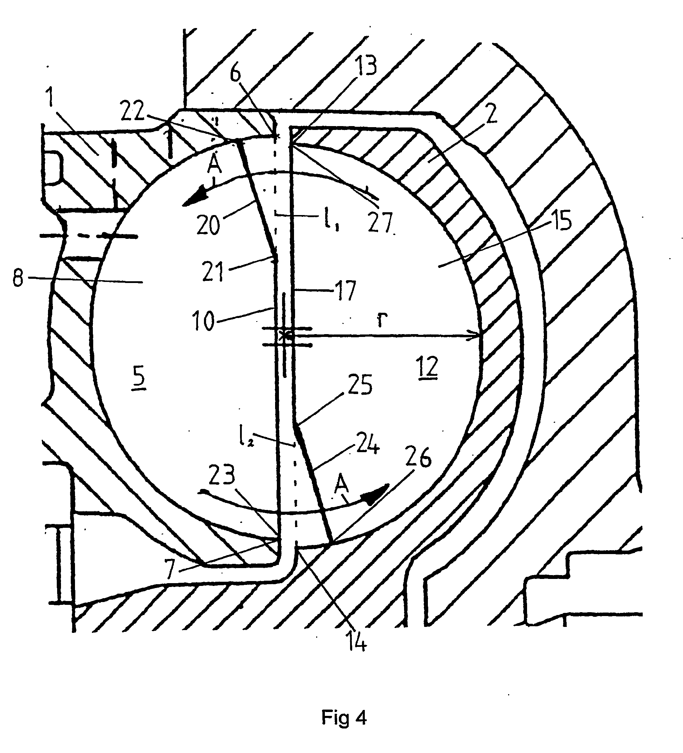

The stator 1 and the rotor 2 are provided coaxially in relation to each other around the shaft 4 such that the annular recesses 5, 12 of the stator 1 and the rotor 2 together forms a toroid-shaped space, which extends around the rotatable shaft 4. The stator 1 comprises a plurality of openings 18 through which a medium in form of an oil is introduceable to the toroid-shaped space when the vehicle is intended to be braked. The supplied oil is guided, during the rotation of the rotor 2, radially outwards by the vanes 15 in the toroid-shaped space along the bottom surface of the rotor recess 12 and is thrown with a high velocity from the outer edge 13 of the rotor recess over to the outer edge 6 of the stator recess 5. The direction of rotation of the oil in the toroid-shaped space is shown by the arrows A in the figures 1 and 4. The oil hits the vanes 8 of the stator 1 and the motion of the oil in the direction of rotation of the rotor 2 is retarded and the oil is guided by the vanes 8 radially inwards along the bottom surface of the recess 5 until it reaches the inner edge 7 of the recess 5. Here, the oil again is thrown over to the rotor 2 and hits the rotor 2 at the inner edge surface 14 of the recess 12. The oil hits the rotating vanes 15 of the rotor 2 at such an angle that a substantially optimal brake action of the rotor 2 is obtained. Thereafter, the oil is guided by the rotating vanes 15 at the same time as it is guided radially outwards along the bottom surface of the recess 15. The brake action, which is obtained by the rotor 2, depends partly on the quantity of oil which is supplied and is circulated in the toroid-shaped space and partly on the rotation speed of the rotor 2. During the braking process, the kinetic energy of the oil is transformed to heat energy. The stator 1 comprises a number of openings 19 through which the oil is arranged to be removed from the toroid-shaped space. The quantity of oil, which flows in the toroid-shaped space between the inlet openings 18 and the outlet openings 19, may be up to 400 l/min. After the circulating oil has left the retarder, it is cooled before it again is supplied to the toroid-shaped space. By the large quantity of cooled circulating oil, the oil also works as an effective cooling medium, which removes the heat energy, generated during the braking process, from the retarder.

The risk of cavitation of the oil in the retarder is greatest, when the oil with a very high velocity reaches the stator 1 in the area of the outer edge 6 of the stator. In order to prevent locally very low pressures in this area from arising, the vanes 8 of the stator 2 here comprise a chamfered portion 20, see Fig 4. The chamfered portion 20 is located in the recess 5 on the inside of a straight line I₁, which extends between the outer 6 and the inner 7 edges, which restricts the recess 5 of the stator 1. The chamfered portion 20 has a linear extension from a brake-point 21 to a radially outer end 22 on the free edge surface 10 of the vanes 8. The distance between the free edge surfaces 10 of the vanes 8 to the line I₁ increases thereby continuously from the brake-point 21 to the outer end 22. The outer end 22 of the vanes 8 is located at a perpendicular distance from said line, which corresponds to about 20 % of the radius r of the toroid-shaped space. The free edge surface 10 of the vanes 8 comprises, from the brake-point 21 to a radially inner end 23, a linear extension, which coincides with the extension of the line I₁. By the presence of the chamfered portion 20, the oil does not come into immediate contact with the vanes 8 of the stator 1 when it is thrown from the rotor 2 with high velocity. Thus, such low pressures do not arise in this area that the risk of cavitation of the oil is present. With a distance from the outer end 22 of the free edge surface 10 of the vanes 8 to the line I₁ of about 20% of the radius of the toroid-shaped space, the capacity of the vanes 8 are only reduced marginally. The brake-point 21 is here located at a distance from the outer end 22 of about 60 % of the radius r of the toroid-shaped space. However, this distance may be varied within relatively wide limits without changing the capacity of the vanes 8 appreciably.

The risk of cavitation in the retarder also arises when the oil with a high velocity reaches the rotor 2 in the area of the inner edge 14 of the recess 12 of the rotor. In order to prevent locally very low pressures from arising in this area, the vanes 15 of the rotor 1 comprise here a chamfered portion 24. The chamfered portion 24 is located in the recess 12 on the inside of a straight line I₂, which extends between the outer 13 and the inner 14 edges, which restrict the recess 12 of the rotor 2. The chamfered portion 24 has a linear extension from a brake-point 25 to a radial inner end 26 on the free edge surface 17 of the vanes 15. The distance between the free edge surface 17 of the vanes 15 to the line I₂ thus increases continuously from the brake-point 25 to the inner end 26. The inner end 26 of the vanes 15 is located at a perpendicular distance from the line I₂, which corresponds to about 20 % of the radius r of the toroid-shaped space. The free edge surface 17 of the vanes 15 comprises from the brake-point 25 to a radial outer end 27 a linear extension, which coincides with the extension of the line I₂. By the presence of the chamfered portion 24, the oil does not immediately come into contact with the vanes 15 of the rotor 2 when it is thrown with a high velocity from the stator 1. Thus, such low pressures do not arise in this area that a risk of cavitation of the oil arises. With a distance from the inner end 26 of the free edge surface 17 of the vanes 15 to the line I₂ of about 20 % of the radius r of the toroid-shaped space, the capacity of the vanes 15 is reduced only marginally. The brake-point 25 is here located at a distance of about 60 % of the radius of the toroid-shaped space from the inner end 26. However, this distance may be varied within relatively wide limits without decreasing the capacity of the vane appreciably.

The present invention is not in any way restricted to the above embodiments described in the drawings but may be modified freely within the scope of the claims. For example, only the vanes 8 of the stator 1 may be provided with chamfered portions. The chamfered portion does not need to have a linear extension but may have a substantially arbitrary shape.

## Claims

1. Hydrodynamic brake comprising a stator (1) and a rotor (2), which each comprises an annular recess (5, 12) restricted by an outer radial edge (6, 13) and an inner radial edge (7, 14) and a plurality of vanes (8, 15) provided in the respective recess (5, 12) of the stator (1) and the rotor (2), said vanes (8, 15) having a free edge surface (10, 17) with a substantially radial extension, wherein the stator (1) and the rotor (2) are provided coaxially in relation to each other in such a way that the annular recesses (5, 12) of the stator (1) and the rotor (2) form a toriod-shaped space, and a medium arranged to be supplied to said toroid-shaped space for providing a brake action during rotation of the rotor (2), **characterised in that** the free edge surface (10) of at least one of the vanes of the stator has a radially outer end (22) located on the inside of a straight line (I₁) extending between the outer (6) and inner (7) edges and restricting the recess (5) of the stator (1).

2. Hydrodynamic brake according to claim 1, **characterised in that** the outer end (22) of the edge surface (10) of the vane (8) is located at a distance inside said straight line (I₁), which distance is within an interval of 10 to 30% of the radius (r) of the toroid-shaped space.

3. Hydrodynamic brake according to claim 1 or 2, **characterised in that** said edge surface (10) of the vane (8) has a chamfered portion (20) located on the inside of said straight line (I₁) and having an extension at which the distance to said line (I₁) increases continuously from a break-point (21) to the outer end (22).

4. Hydrodynamic brake according to claim 3, **characterised in that** said chamfered portion (20) of the edge surface (10) has a linear extension from the break-point (21) to the outer end (22).

5. Hydrodynamic brake according to any one of the preceding claims 3 or 4, **characterised in that** the edge surface (10) comprises a second portion, which extends between a radially inner end (23) of the edge surface to said break-point (21) and that the second portion of the edge surface has an extension which coincides with the extension of said line (I₁).

6. Hydrodynamic brake according to any one of the preceding claims, **characterised in that** the edge surface (17) of at least one of the vanes (15) of the rotor (2) has a radial inner end (26) located on the inside of a straight line (I₂) extending between the outer (13) and inner (14) edges, which restricts the recess (12) of the rotor (2).

7. Hydrodynamic brake according to claim 6, **characterised in that** the inner end (26) of the edge surface (17) of the vane of the rotor is located at a distance inside said straight line (I₂), which distance is within an interval of 10 to 30 % of the radius (r) of the toroid-shaped space.

8. Hydrodynamic brake according to claim 6 or 7, **characterised in that** said edge surface (17) of the vane (15) of the rotor (2) has a chamfered portion (24) located on the inside of said straight line (I₂) and having an extension at which the distance to said line (I₂) increases continuously from a break-point (25) to the inner end (26).

9. Hydrodynamic brake according to claim 8, **characterised in that** said chamfered portion (24) of the edge surface (17) has a linear extension from the break-point (25) to the inner end (26).

10. Hydrodynamic brake according to any one of the preceding claims 6-9, **characterised in that** the edge surface (17) of the vane (15) of the rotor (2) comprises a second portion, which extends between a radially outer end (27) to said break-point (25) of the edge surface and that the second portion of the edge surface (17) has an extension which coincides with the extension of said line (I₂).

## Patentansprüche

1. Hydrodynamische Bremse, umfassend einen Stator (1) und einen Rotor (2), wobei beide jeweils eine ringförmige Ausnehmung (5, 12) aufweisen, die von einem radial außenliegenden Rand (6, 13) und einem radial innenliegenden Rand (7, 14) begrenzt sind, und eine Mehrzahl von Schaufeln (8, 15), die in der jeweiligen Ausnehmung (5, 12) des Stators (1) und des Rotors (2) angeordnet sind, wobei die Schaufeln (8, 15) eine freie Randfläche (10, 17) mit im Wesentlichen radialer Erstreckung aufweisen, wobei der Stator (1) und der Rotor (2) koaxial relativ zueinander derart angeordnet sind, dass die ringförmigen Ausnehmungen (5, 12) des Stators (1) und des Rotors (2) einen toroid-förmigen Raum bilden, und wobei ein Medium dazu vorgesehen ist, dem toroid-förmigen Raum zugeführt zu werden, um eine Bremswirkung während einer Drehung des Rotors (2) bereitzustellen,
**dadurch gekennzeichnet, dass** die freie Randfläche (10) wenigstens einer der Schaufeln des Stators ein radial außenliegendes Ende (22) aufweist, das innerhalb eine Linie (I₁) liegt, die sich zwischen den äußeren (6) und inneren (7) Rändern erstreckt und die Ausnehmung (5) des Stators (1) begrenzt.

2. Hydrodynamische Bremse nach Anspruch 1,
**dadurch gekennzeichnet, dass** das äußere Ende (22) der Randfläche (10) der Schaufel (8) in einem Abstand innerhalb der Linie (I₁) angeordnet ist, wobei der Abstand in einem Bereich von 10 bis 30% des Radius (r) des toroid-förmigen Raumes liegt.

3. Hydrodynamische Bremse nach Anspruch 1 oder 2,
**dadurch gekennzeichnet, dass** die Randfläche (10) der Schaufel (8) einen schräg verlaufenden Abschnitt (20) aufweist, der innerhalb der Linie (I₁) angeordnet ist und der sich derart erstreckt, dass der Abstand zu der Linie (I₁) kontinuierlich von einem Knickpunkt (21) zum äußeren Ende (22) hin zunimmt.

4. Hydrodynamische Bremse nach Anspruch 3,
**dadurch gekennzeichnet, dass** der schräg verlaufende Bereich (20) der Randfläche (10) eine lineare Erstreckung von dem Knickpunkt (21) zu dem äußeren Ende (22) aufweist.

5. Hydrodynamische Bremse nach einem der vorangehenden Ansprüche 3 oder 4,
**dadurch gekennzeichnet, dass** die Randfläche (10) einen zweiten Abschnitt aufweist, der sich zwischen einem radial inneren Ende (23) der Randfläche zu dem Knickpunkt (21) erstreckt und dass der zweite Abschnitt der Randfläche eine Erstreckung aufweist, die mit der Erstreckung der Linie (I₁) zusammenfällt.

6. Hydrodynamische Bremse nach einem der vorangehenden Ansprüche,
**dadurch gekennzeichnet, dass** die Randfläche (17) wenigstens einer der Schaufeln (15) des Rotors (2) ein radial inneres Ende (26) aufweist, das innerhalb einer Linie (I₂) angeordnet ist, die sich zwischen dem äußeren (13) und dem inneren (14) Rand erstreckt, die die Ausnehmung (12) des Rotors (2) begrenzen.

7. Hydrodynamische Bremse nach Anspruch 6,
**dadurch gekennzeichnet, dass** das innere Ende (26) der Randfläche (17) der Schaufel des Rotors in einem Abstand innerhalb der Linie (I₂) angeordnet ist, wobei der Abstand in einem Intervall von 10 bis 30% des Radius (r) des toroid-förmigen Raumes liegt.

8. Hydrodynamische Bremse nach Anspruch 6 oder 7,
**dadurch gekennzeichnet, dass** die Randfläche (17) der Schaufel (15) des Rotors (2) einen schräg verlaufenden Abschnitt (24) aufweist, der auf der Innenseite der Linie (I₂) angeordnet ist und der eine Erstreckung aufweist, wobei der Abstand zu der Linie (I₂) kontinuierlich von einem Knickpunkt (25) zum inneren Ende (26) hin zunimmt.

9. Hydrodynamische Bremse nach Anspruch 8,
**dadurch gekennzeichnet, dass** der abgeschrägte Abschnitt (24) der Randfläche (17) eine lineare Erstreckung von dem Knickpunkt (25) zum inneren Ende (26) aufweist.

10. Hydrodynamische Bremse nach einem der vorangehenden Ansprüche 6 bis 9,
**dadurch gekennzeichnet, dass** die Randfläche (17) der Schaufel (15) des Rotors (2) einen zweiten Abschnitt aufweist, der sich zwischen einem radial äußeren Ende (27) zu dem Knickpunkt (25) der Randfläche hin erstreckt, und dass der zweite Abschnitt der Randfläche (17) eine Erstreckung aufweist, die mit der Erstreckung der Linie (I₂) zusammenfällt.

## Revendications

1. Frein hydrodynamique comprenant un stator (1) et un rotor (2) qui comportent chacun un évidement annulaire (5, 12) limité par un bord radial extérieur (6, 13) et un bord radial intérieur (7, 14) et une pluralité d'ailettes (8, 15) prévues dans l'évidement respectif (5, 12) du stator (1) et du rotor (2), lesdites ailettes (8, 15) ayant une surface de bord libre (10, 17) avec un prolongement essentiellement radial, dans lequel le stator (1) et le rotor (2) sont prévus coaxialement l'un par rapport à l'autre de telle façon que les évidements annulaires (5, 12) du stator (1) et du rotor (2) forment un espace de forme toroïdale et un milieu est agencé pour être amené dans ledit espace de forme toroïdale pour fournir une action de freinage pendant la rotation du rotor (2), **caractérisé en ce que** la surface de bord libre (10) d'au moins l'une des ailettes du stator présente une extrémité radialement extérieure (22) située sur l'intérieur d'une ligne droite (I₁) s'étendant entre les bords extérieur (6) et intérieur (7) et limitant l'évidement (5) du stator (1).

2. Frein hydrodynamique selon la revendication 1, **caractérisé en ce que** l'extrémité extérieure (22) de la surface de bord (10) de l'ailette (8) est située à une distance à l'intérieur de ladite ligne droite (I₁), laquelle distance se trouve dans un intervalle de 10 à 30 % du rayon (r) de l'espace de forme toroïdale.

3. Frein hydrodynamique selon la revendication 1 ou 2, **caractérisé en ce que** ladite surface de bord (10) de l'ailette (8) présente une partie chanfreinée (20) située sur l'intérieur de ladite ligne droite (I₁) et ayant un prolongement auquel la distance à ladite ligne (I₁) augmente de façon continue d'un point de rupture (21) à l'extrémité extérieure (22).

4. Frein hydrodynamique selon la revendication 3, **caractérisé en ce que** ladite partie chanfreinée (20) de la surface de bord (10) présente un prolongement linéaire à partir du point de rupture (21) à l'extrémité extérieure (22).

5. Frein hydrodynamique selon l'une quelconque des revendications précédentes 3 ou 4, **caractérisé en ce que** la surface de bord (10) comprend une deuxième partie qui se prolonge entre une extrémité radialement intérieure (23) de la surface de bord audit point de rupture (21) et **en ce que** la deuxième partie de la surface de bord présente un prolongement qui coïncide avec le prolongement de ladite ligne (I₁).

6. Frein hydrodynamique selon l'une quelconque des revendications précédentes, **caractérisé en ce que** la surface de bord (17) d'au moins l'une des ailettes (15) du rotor (2) présente une extrémité radiale intérieure (26) située sur l'intérieur d'une ligne droite (I₂) se prolongeant entre les bords extérieur (13) et intérieur (14), qui limite l'évidement (12) du rotor (2).

7. Frein hydrodynamique selon la revendication 6, **caractérisé en ce que** l'extrémité intérieure (26) de la surface de bord (17) de l'ailette du rotor est située à une distance à l'intérieur de ladite ligne droite (I₂), laquelle distance est dans un intervalle de 10 à 30 % du rayon (r) de l'espace de forme toroïdale.

8. Frein hydrodynamique selon la revendications 6 ou 7, **caractérisé en ce que** ladite surface de bord (17) de l'ailette (15) du rotor (2) présente une partie chanfreinée (24) située sur l'intérieur de ladite ligne droite (I₂) et ayant un prolongement auquel la distance à ladite ligne (I₂) augmente de façon continue à partir d'un point de rupture (25) à l'extrémité intérieure (26).

9. Frein hydrodynamique selon la revendication 8, **caractérisé en ce que** ladite partie chanfreinée (24) de la surface de bord (17) présente un prolongement linéaire du point de rupture (25) à l'extrémité intérieure (26).

10. Frein hydrodynamique selon l'une quelconque des revendications précédentes 6 à 9, **caractérisé en ce que** la surface de bord (17) de l'ailette (15) du rotor (2) comprend une deuxième partie qui se prolonge entre une extrémité radialement extérieure (27) audit point de rupture (25) de la surface de bord et **en ce que** la deuxième partie de la surface de bord (17) présente un prolongement qui coïncide avec le prolongement de ladite ligne (I₂).
